Europäisches Patentamt

European Patent Office

Office européen des brevets

(11) Publication number: **0 327 857**
A1

## (12) EUROPEAN PATENT APPLICATION

(21) Application number: **89100940.9**

(22) Date of filing: 20.01.89

(51) Int. Cl.⁴: **A23L 1/176 , A23L 1/325 , A23L 1/10 , A23P 1/08**

(30) Priority: **03.02.88 IL 85309**

(43) Date of publication of application:
**16.08.89 Bulletin 89/33**

(84) Designated Contracting States:
**AT BE CH DE ES FR GB GR IT LI LU NL SE**

(71) Applicant: **Plotnitzky, Nachman**
**13 Mevoot Street**
**Savyon 56915(IL)**

(72) Inventor: **Plotnitzky, Nachman**
**13 Mevoot Street**
**Savyon 56915(IL)**

(74) Representative: **Modiano, Guido et al**
**MODIANO, JOSIF, PISANTY & STAUB**
**Modiano & Associati Baaderstrasse 3**
**D-8000 München 5(DE)**

(54) New use for dried fragmented vegetables.

(57)

NEW USE FOR DRIED FRAGMENTED VEGETA-
BLES

The present invention provides a food product
and a process for its preparation in the form of a
coated central core consisting of meat, poultry, fish,
seafood, cheeses, fruit, or vegetables, characterized
by the feature that at least a major proportion of the
outer layer comprises at least one dried, fragmented
vegetable, such as beans, beet, cabbagge, carrots,
cauliflower, celery, garlic, leeks maize, mushrooms,
onions, peas, peppers and potatoes.

EP 0 327 857 A1

## FIELD OF THE INVENTION

The present invention relates in one aspect to a food products of the "breaded" type, in which, however, the breaded layer is replaced by a layer which is either mainly or entirely comprised by dried fragmented vegetables, and in another aspect to a process for making such products.

## BACKGROUND OF THE INVENTION

In recent years there has been a vast increase in the consumption of what are termed "convenience foods", that is to say, foods which are either ready to eat, or else require minimal cooking time, compared with the laborious preparative and cooking procedure necessary in traditional methods of cooking. Included in such foods are a group of "breaded" foods, that is to say, foods of animal or vegetable origin which are coated with breading and then usually fried. The "breading" originated in domestic cooking recipes in which breadcrumbs were used, probably as an economic means of using up otherwise unusable bread scraps, but the breadcrumbs are replaced on the industrial scale by a breading made from cereals which is made for the specific purpose of coating foods in the food processing industry.

In the developed countries particularly, a search is continuously being made for variety in the diet, and an increasing market is constituted by persons who either for health or religious reasons wish to eat foods limited to a particular range of ingredients.

It has now been discovered, in accordance with the present invention, that if for the outer layer in breaded products, there is substituted a vegetable layer, there can be obtained a nutritious and tasty product, which can also be adapted to meet the requirements of those segments of the population requiring special diets, for whatever reasons. This discovery must be regarded as unexpected and surprising, because there is no precedent for supposing that by the substitution referred to, there could be obtained these bread-like products, which would have adequate uniformity of flavor, and an attractive flavor, to make make marketing of such products a worthwhile enterprise. There is also no precedent for supposing that dried fragmented vegetables would be able to adhere adequately for the purpose contemplated.

## SUMMARY OF THE INVENTION

The present invention accordingly provides a food product in the form of a coated central core, characterized by the feature that at least a major proportion of the outer layer, comprises at least one dried fragmented vegetable.

## DETAILED DESCRIPTION OF THE INVENTION

As stated above, at least a major proportion of the outer layer of the present food product comprises at least one dried fragmented vegetable. The minor proportion may comprise any other edible animal or vegetable product, including e.g. breadcrumbs, as this term is understood in the food processing art. Alternatively, however, substantially all of the outer layer may comprise at least one dried fragmented vegetable.

The at least one dried fragmented vegetable may be comprised, e.g., of the following vegetables, namely, beans, beet, cabbage, carrots, cauliflower, celery, garlic, leeks, maize, mushrooms, onions, peas, peppers and potatoes.

It is to be understood that in accordance with the present invention, either a single vegetable or a combination of vegetables may be used. Non-limiting examples of single vegetables in this context are potatoes and onions.

It is also to be noted that in the specification and claims, the term "dried fragmented vegetable" is intended to convey not only fragments of dried vegetables prepared from whole vegetables, but also, for example, fragments prepared by extruding powdered vegetables, or by crumbling extruded, sliced, diced, freeze-dried and/or cooked vegetables. The expression "dried vegetables" is well understood in the food processing art. While such dried vegetables may comprise, e.g., about 5-6% water, the person skilled in the art will be well aware of the amount of water which may be tolerated in the dried vegetables, in order to avoid difficulties arising in a processing plant.

In a particular embodiment of the food product of the invention, there may be an analogy to what are known as "breaded products", except that the breading or breadcrumb layer of the known products is replaced either predominantly or substantially entirely by dried fragmented vegetables as described herein. Thus, for example, the central core of the present product may comprise at least one of the groups (a) and (b), namely:

(a) whole meat (e.g. beef, lamb or pigmeat), poultry (e.g. chicken, duck, goose or turkey) fish (both salt-water and fresh water), seafood (e.g. shrimps), cheese, fruit (e.g. pineapple slices) and vegetables (e.g. mushrooms); and

(b) cereal, meat, fish, seafood, cheese, fruit, nuts, soya and other vegetables, which has been, for example, ground-up or grated (or otherwise fragmented), and subsequently consolidated, e.g. in the form of patties, such as hamburgers, fish cakes, nut cutlets, and soya schnitzels and patties.

The food product according to the invention may comprise at least one intermediate layer between the central core and the outer layer, such as, for example, an edible dust containing cereal (e.g. wheat), potatoes and/or soya. The term "dust" herein includes, for example, flour and meal, which may be made from the speficied ingredients as raw materials. Also, over the edible dust layer there may be superimposed a layer of batter, as is well known to those skilled in the art. The purpose of the intermediate layer is to enable the outer layer to adhere well to the central core.

The food product according to the invention may be a cooked food product. Thus, e.g., it may have been cooked by frying in oil, or by heating in an oven; or it may have been fried in oil and then heated in an oven. Alternatively, however, the food product of the invention need not be cooked. For example, it may be prepared as described herein without any cooking step, and it may then be frozen and marketed as such, or marketed fresh without freezing; the consumer may then cook the product, as and when desired, for example frying or baking in the presence or absence of cooking oil in a conventional or microwave oven.

The present food product may also contain, besides the ingredients previously described, at least one member selected from acceptable natural and artificial flavorings, preservatives and stabilizers, and particularly spices.

It will be appreciated that it is possible to select all the ingredients (including oil where this is used for cooking) so as to satisfy certain specialized markets, as e.g. the vegetarian market by restricting the ingredients to vegetable products, or to vegetable and dairy products. The ingredients may also be selected so as to satisfy the kosher food market. It is also evidently within the scope of the invention to select the ingredients so as to be free of cereals and thus satisfy the kosher passover food market, as well as to be suitable for persons who are allergic to cereal products.

In accordance with a particular aspect of the invention, the present products may be prepared by a process which comprises the steps of: selecting the central core material from at least one of the groups (a) and (b), previously described, namely:

(a) at least one whole member selected from meat, poultry, fish, seafood, cheese, fruit and vegetables; and

(b) at least one member in consolidated ground-up or grated form selected from cereal, meat, fish, seafood, cheese, fruit, nuts, soya and other vegetables; coating the central core material with batter; and applying a further coating over the batter-coated central core, the further coating being characterized by the feature that either a major proportion thereof, or substantially the whole of it, comprises at least one dried fragmented vegetable.

After applying the further coating, the product may be frozen prior to packaging and marketing (or it may be marketed without freezing), so that it may be cooked by the consumer. Alternatively, it may be subjected to at least one additional step of heating in order to at least partially cook said at least one fragmented vegetable. This additional step could include heating either in the presence or absence of a cooking oil. While the product may be fried in oil, this is not essential; thus, in the alternative, it may simply be heated in an oven. The partially or wholly cooked product may be subsequently packaged and marketed, so that cooking may be completed by the consumer if necessary, or if the product is entirely pre-cooked it merely needs to be heated prior to consumption.

Preferably, the coating step includes the sub-steps of coating first with an edible dust (as described above) and then with batter. The fragmented vegetables may be selected, e.g., as described above. The subjecting step may be effected in the presence of a cooking oil. Suitable cooking oils are, for example, coconut, cottonseed, groundnut, olive, safflower, sesame, soya and sunflower oils. Thus in a particular embodiment, the intermediate composite may be fried in a suitable oil and optionally further cooked in an oven. It is within the competence of persons skilled in the art to select frying and/or cooking times and temperatures to avoid any possible deleterious effect on the flavor and eating qualities of the end products. All of the ingredients may be particularly selected, as described above, for the purpose of serving particular markets.

The present products possess the advantage of improved taste and eating qualities over the breaded products of the prior art. Presuming that when the present products are prepared by frying, for example, they will absorb a similar quantity of oil to the prior breaded products, then to the extent that the breading is replaced by vegetables in accordance with the present invention, it is to be expected that less relatively less calories will be present in the present products. It is also seen from the description herein that the present invention makes possible products for the purpose of serving special markets, such as for persons who wish to observe a vegetarian, kosher or cereal-free diet.

The invention will now be illustrated by the following non-limiting Examples. In each of the Examples, in a continuous operation, chicken schnitzel was sprayed with edible dust (wheat flour or potato flour), dipped in batter, coated with dried vegetable fragments, fried in cottonseed oil, and heated in an oven while allowing excess oil to drain away. The dried vegetable fragments were mixed while waiting to be applied, in order to avoid separation of components of different densities and thus achieve a uniform product over a period of continuous operation. The fragments had the following sizes, namely, carrot and celery about 0.7 to about 2.5 mm.; onion, about 2.0 to about 5.0 mm. In all cases the end products had excellent flavour and eating qualities.

## EXAMPLE I

All parts are by weight. The mixture of dried vegetable fragments comprised celery 50 parts, onion 75 parts, carrot 75 parts and potato flakes 50 parts. Frying was effected at about 140°C for 45 secs., and was followed by 10 mins. residence in an oven at about 210°C

## EXAMPLE II

The mixture of dried vegetable fragments comprised celery 40 parts, onion 60 parts, and carrot 150 parts. Frying was effected at about 145°C for 40 secs., and was followed by 10 mins. residence in an oven at about 210°C

## EXAMPLE III

The mixture of dried vegetable fragments comprised crumbled salted crispy potato chips 75 parts and potato flakes 25 parts. Frying was effected at about 155°C for 40 secs., and was followed by 10 mins. residence in an oven at about 210°C

Similarly to these Examples, champagne or oyster mushrooms may be coated with onion flakes.

While the invention has been particularly described, it will be evident to those skilled in the art that many variations and modifications may be made. The invention is accordingly not to be construed as limited to the embodiments particularly described, rather its scope will be defined according to the claims which follow.

## Claims

1. A food product in the form of a coated central core, characterized by the feature that at least a major proportion of the outer layer comprises at least one dried fragmented vegetable.

2. A food product according to claim 1, wherein substantially all of the outer layer comprises at least one dried fragmented vegetable.

3. A food product according to either claim 1 or claim 2, wherein said at least one dried fragmented vegetable is selected from the group consisting of beans, beet, cabbage, carrots, cauliflower, celery, garlic, leeks, maize, mushrooms, onions, peas, peppers and potatoes.

4. A food product according to any of the preceding claims, which includes a central core comprising at least one of the groups (a) and (b), namely:
(a) at least one whole member selected from the group consisting of meat, poultry, fish, seafood, cheese, fruit and vegetables; and
(b) at least one member in consolidated ground-up or grated form, selected from the group consisting of cereal, meat, fish, seafood, cheese, fruit, nuts, soya and other vegetables.

5. A food product according to any of the preceding claims, which comprises at least one intermediate layer between said central core and said outer layer.

6. A food product according to claim 5, wherein said at least one intermediate layer includes an edible dust comprising at least one member selected from the group consisting of cereal, potatoes and soya.

7. A food product according to claim 6, wherein said intermediate layer comprises said edible dust as a layer over said central core, and additionally a layer of batter over said edible dust layer.

8. A food product according to any preceding claims which is a cooked food product.

9. A food product according to claim 8 which is a cooked-in-oil food product.

10. A food product according to any of the preceding claims, which contains additionally at least one member selected from the group consisting of acceptable natural and artificial flavorings, preservatives and stabilizers.

11. A food product according to any of the preceding claims, wherein all the ingredients are selected from the group consisting of vegetable products.

12. A food product according to any of claims 1 to 10, wherein all the ingredients are selected from the group consisting of vegetable and dairy products.

13. A food product according to any of the preceding claims, wherein all the ingredients are selected from cereal-free products.

14. A food product according to claim 1 and substantially as hereinbefore described.

15. A food product according to claim 1 and substantially as hereinbefore described in any of the Examples.

16. A process for preparing a food product in the form of a coated central core, which comprises the step of:
selecting the central core material from at least one of the groups (a) and (b), namely:
(a) at least one whole member selected from the group consisting of meat, poultry, fish, seafood, cheese, fruit and vegetables; and
(b) at least one member in consolidated ground-up or grated form, selected from the group consisting of cereal, meat, fish, seafood, cheese, fruit, nuts, soya and other vegetables;
coating said central core material with batter; and
applying a further coating over the batter-coated central core, said further coating being characterized by the feature that at least a major proportion thereof comprises at least one dried fragmented vegetable.

17. A process according to claim 16, wherein said coating step includes the sub-steps of coating first with an edible dust comprising at least one member selected from the group consisting of cereal, potatoes and soya, and then with batter.

18. A process according to either claim 16 or claim 17, wherein said further coating is characterized by the fact that substantially all of it comprises at least one dried fragmented vegetable.

19. A process according to any of claims 16 to 18, wherein said at least one dried fragmented vegetable is selected from the group consisting of beans, beet, cabbage, carrots, cauliflower, celery, garlic, leeks, maize, mushrooms, onions, peas, peppers and potatoes.

20. A process according to any of claims 16 to 19, wherein after said applying step the product is frozen.

21. A process according to any of claims 16 to 19, wherein after said applying step the product is subjected to at least one additional step of heating in order to at least partially cook said at least one fragmented vegetable.

22. A process according to claim 21, wherein said at least one additional step includes heating in the presence of a cooking oil.

23. A process according to claim 21, wherein said at least one additional step includes heating in the absence of a cooking oil.

24. A process according to any of claims 16 to 23, wherein at least one comestible ingredient of said product contains at least one member selected from the group consisting of acceptable natural and artificial flavorings, preservatives and stabilizers.

25. A process according to any of claims 16 to 24, wherein all the ingredients of said food product including said cooking oil if used consist of vegetable products.

26. A process according to any of claims 16 to 24, wherein all the ingredients of said food product including said cooking oil is used are selected from the group consisting of vegetable and dairy products.

27. A process according to any of claims 16 to 26, wherein all the ingredients of said food product including said cooking oil if used are selected from cereal-free products.

28. A process according to claim 16 and substantially as hereinbefore described.

29. A process according to claim 16 and substantially as hereinbefore described in any of the Examples.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 074 455  (EXPORT TRADING S.R.L.) <br> * abstract, claim * <br> --- | 1,2,4, 10,16 | A 23 L    1/176 <br> A 23 L    1/325 <br> A 23 L    1/10 <br> A 23 P    1/08 |
| A | EP-A-0 235 308  (FRISCO-FINDUS AG) <br> * column 5, lines 23-37, claims 1-6 * <br> --- | 1,3,4, 16,20 | |
| A | DE-A-2 610 541  (GENERAL FOODS CORP.) <br> * claims 1,4-6 * <br> ----- | 1,4,10 | |
| | | | TECHNICAL FIELDS SEARCHED (Int. Cl.4) |
| | | | A 23 L    1/00 <br> A 23 P    1/00 |

The present search report has been drawn up for all claims

| Place of search | Date of completion of the search | Examiner |
|---|---|---|
| BERLIN | 28-04-1989 | SCHULTZE D |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P0401)